# EUROPÄISCHE PATENTSCHRIFT

(11) **EP 1 558 002 B1**
(45) Veröffentlichungstag und Bekanntmachung des Hinweises auf die Patenterteilung: **08.10.2008**
(21) Anmeldenummer: 04001453.2
(22) Anmeldetag: 23.01.2004
(51) Int. Cl.: H04L 29/12

(54) **Verfahren zur Zuordnung einer IP-Adresse zu einem Gerät**
Method for assigning an IP-address to a device
Méthode pour attribuer une adresse IP à un appareil

(43) Veröffentlichungstag der Anmeldung: 27.07.2005
(73) Patentinhaber: SIEMENS AKTIENGESELLSCHAFT, 80333 München (DE)
(72) Erfinder: Steindl, Günter, 92284 Poppenricht (DE)

(56) Entgegenhaltungen:
- EP-A- 1 081 921
- NETWORK VISION: "Comparison between Auto-IP and DHCP Option 82"[Online] 2004, Seiten 1-7, XP002288508 2004 Gefunden im Internet: URL:http://www.intravue.net/autoip/Auto-IP _Option82paper1.pdf> [gefunden am 2004-07-14]
- "IEEE Std 803.1-1992 IEEE Recommended Practice for Unique Identification in Power Plants and Related Facilities - Component Function Identifiers" IEEE STANDARD 803.1, [Online] 1992, Seiten 1-1, XP002288535 Gefunden im Internet: URL:http://standards.ieee.org/reading/ieee /std_public/description/nuclear/803.1-1992 _desc.html> [gefunden am 2004-07-15]
- BIERMAN A.; MCCLOGHRIE K.: 'Physical Topology MIB and Discovery Protocol Proposal; draft-bierman-ptopo-mib-proto-00.txt' IETF INTERNET DRAFT 25 M{rz 1997, Seiten 1 - 38, XP015010876

## Beschreibung

Die Erfindung betrifft ein Verfahren zur Zuordnung einer IP-Adresse zu einem Gerät, sowie ein digitales Speichermedium, einen Switch und ein an den Switch anschließbares Gerät.

Aus dem Stand der Technik ist die Zuordnung einer Internetprotokoll (IP)-Adresse zu einem Gerät mittels DHCP (Dynamic Host Configuration Protocol) bekannt. DHCP kommt üblicherweise in Local Area Network (LAN)-Umgebungen zum Einsatz, um IP-Adressen von einem zentralen Adressserver aus zu vergeben.

Die Auswahl der dem anforderndem Gerät zuzuordnenden IP-Adresse trifft der DHCP-Server an Hand der lokalen Einstellungen (Statische oder dynamische Zuteilung) und der im DHCP-Request gelieferten Optionen. Mittels den DHCP-Options (vgl. Internetseite http://www.iana.org/assignments/bootp-dhcp-parameters) "#12 Host Name Option", "#43 Vendor Specific Option", "#61 Client Identifier", "#82 Relay Agent Information", "#128-254 Privat Use" bzw. einer neu definierten weiteren Option, kann der DHCP Server einem Client die bei ihm hinterlegte IP-Adresse eindeutig zuordnen.

Um diese eindeutige Zuordnung zu ermöglichen muss der gewählte Identifikator (Kennung) bei allen Varianten LAN-weit eindeutig sein.

Dieser Identifikator muss auf dem Client remanent hinterlegt sein, um ein reproduzierbares Ergebnis der Adressauflösung zu erhalten. Als Identifikator für einen Client oder einen Port eines Client kann z.B. eine UUID (Universal Unique Identifier) oder ein DNS (Domain Name Service) Name verwendet werden. Im DHCP Server können mehrere Identifier (Alias) für eine IP-Adresse hinterlegt werden.

Durch die "#82 Relay Agent Information" des DHCP kann das die IP-Adresse anfordernde Endgerät durch den Port des Koppelknotens ("Switch"), an dem es angeschlossen ist, genau identifiziert werden. Die Option 82 ist vergleichbar mit einer Identifikation per Media Access Control (MAC)-Adresse. Sie hat den Vorteil, dass die Identifizierung auf der Ebene 3 des Open System Interconnection (OSI)-Schichtenmodells erfolgt und somit durch das IP-Protokoll unterstützt wird (vgl. hierzu IEE 48. Jahrgang 2003 Nr. 11, Seite 32 bis 34, "Netzmanagement für Ethernet, Schritt in die richtige Richtung", Frank Seufert).

Die Zuordnung von IP-Adressen mittels DHCP und "#82 Relay Agent Information" ist ferner auch bekannt aus den US-Patentanmeldungen US-A-20040010653 und US-A-20030101243.

Ein Nachteil der Zuordnung von IP-Adressen mittels DHCP und Option 82 ist, dass die Switches durch die aufwändige Filterung der DHCP-Anforderungen stark belastet werden. Ein Switch muss mittels eines solchen Filters alle DHCP-Request identifizieren, und sie dem Datenstrom entnehmen, um zusätzliche Informationen einzutragen bzw. zu erkennen, dass bereits ein Eintrag vorliegt.. Anschließend wird der DHCP-Request wieder in den Datenstrom eingefügt. Hierbei ist insbesondere nachteilig, dass effiziente Switching-Mechanismen wie Cut-Through unmöglich gemacht werden.

EP 1 081 921 B1 offenbart ein Verfahren zur Vergabe von Adressen in Kommunikationsnetzen, insbesondere zur Vergabe von Adressen in Netzen, welche auf TCP/IP-Protokollen basieren.

A. Bierman, K. McCIoghrie: "Physical Topology MIB and Discovery Protocol Proposal; draft-bierman-ptopo-mib-proto-00.txt"' IETF INTERNET DRAFT, 25. März 1997, Seiten 1-38, offenbart die Verwendung einer "Management Information Base" zur Verwendung mit Netzwerk-Management Protokollen im Internet. Ziel dabei ist die Identifikation von physikalischen Verbindungen zwischen zwei Netzwerk-Ports.

Der Erfindung liegt demgegenüber die Aufgabe zu Grunde, ein verbessertes Verfahren zur Zuordnung einer IP-Adresse zu einem Gerät zu schaffen. Ferner liegt der Erfindung die Aufgabe zu Grunde, ein entsprechendes digitales Speichermedium, Gerät und einen Switch zu schaffen.

Die der Erfindung zu Grunde liegenden Aufgaben werden jeweils mit den Merkmalen der unabhängigen Patentansprüche gelöst. Bevorzugte Ausführungsformen der Erfindung sind in den abhängigen Patentansprüchen angegeben.

Durch die Erfindung wird ein Verfahren zur Zuordnung einer IP-Adresse zu einem Gerät geschaffen, wobei eine Kennung des Ports, an den das Gerät angeschlossen ist, von dem Switch an das Gerät übertragen wird. Die Kennung des Ports wird dann von dem Gerät an einen Adressserver übertragen, der auf der Grundlage der Kennung des Ports dem Gerät eine IP-Adresse zuordnet. Dieses Verfahren wird angewendet, wenn das Gerät noch keine "eigene" Kennung erhalten hat.

Von besonderem Vorteil ist hierbei, dass die aufwändige Filterung der Datenpakete, wie sie im Stand der Technik zur Erkennung der DHCP-Requests durch den Switch erforderlich ist, entfällt. Dadurch wird der Switch entlastet und es können effiziente Switching-Mechanismen wie zum Beispiel Cut-Through in dem Switch eingesetzt werden.

Dies ist von ganz besonderem Vorteil für Anwendungen in der Automatisierungstechnik, insbesondere für Industrial Ethernet und Realtime Ethernet. Insbesondere ermöglicht die Erfindung ein effizientes Netzwerkmanagement von Ethernet -Anwendungen im industriellen Bereich, die oft eine sehr große Anzahl von Knoten aufweisen.

Beispielsweise kann ein defektes Gerät durch ein Austauschgerät ersetzt werden, ohne dass manuell in das Netzwerkmanagement eingegriffen werden muss. Die Zuordnung der IP-Adresse zu dem Austauschgerät kann automatisch ohne jede Nutzerinteraktion erfolgen.

Nach einer bevorzugten Ausführungsform der Erfindung wird die Kennung des Ports an das an den Port angeschlossenen Gerät mit Hilfe eines Nachbarschaftserkennungsprotokolls übertragen. Hierzu eignet sich insbesondere das LLDP-Protokoll nach STANDARD IEEE802.1AB. Mit Hilfe der Mechanismen des Slow-Protokolls (STANDARD IEEE803.1) liefert LLDP Nachbarschaftsinformationen in geschalteten Netzen. Diese Nachbarschaftsinformationen werden zur eindeutigen Adressierung verwendet.

Nach einer bevorzugten Ausführungsform der Erfindung erfolgt die Zuordnung einer IP-Adresse nach dem DHCP-Protokoll. Nach dem DHCP-Protokoll wird die Vergabe der IP-Adresse an ein Gerät durch das Gerät selbst eingeleitet, indem das Gerät einen entsprechenden DHCP-Request an einen DHCP-Adressserver absendet. Dieser DHCP-Request beinhaltet die Kennung des Ports, an den das Gerät angeschlossen ist, als Grundlage für die Zuordnung der IP-Adresse zu dem Gerät.

Nach einer weiteren bevorzugten Ausführungsform der Erfindung wird das Discovery and Configuration Protocol (DCP) verwendet. Im Unterschied zu DHCP wird hierbei die Vergabe der IP-Adressen nicht durch die Endgeräte, sondern durch einen DCP-Adressserver eingeleitet. Dieser fragt von dem betreffenden Gerät die Kennung des Ports, an den das Gerät angeschlossen ist, ab, um auf dieser Grundlage die IP-Adresse dem Gerät zuzuordnen.

Für den oben beschriebenen Betrieb gibt es beispielsweise zwei Varianten:
a) Es ist vorgegeben, das an einem bestimmten Port eines Switches ein Gerät angeschlossen sein soll. Ist es nicht angeschlossen, pollt der DCP-Adressserver den Switch mit der Frage: "Wer ist an Port x angeschlossen". Meldet der Switch "keiner" wird weiter gepollt. Meldet der Switch Gerät xyz, so wird dieses Gerät mit einer Adresse und einem Namen versehen. Von besonderem Vorteil ist dabei, dass es weniger Traffic im Netz gibt, da nur Unicasts verwendet werden.
b) Es ist vorgegeben, das an einem bestimmten Port eines Switches ein Gerät angeschlossen sein soll. Ist es nicht angeschlossen, pollt der DCP-Adressserver das potenziell vorhandene Gerät mit einem DCP-Multicast mit der Frage: "Wer ist an Port x angeschlossen". Meldet sich keiner wird weiter gepollt. Meldet sich das Gerät xyz, so wird dieses Gerät mit einer Adresse und einem Namen versehen. Von besonderem Vorteil ist dabei, dass der Switch nur seine PortID über LLDP bekannt geben muss.

Im Weiteren werden bevorzugte Ausführungsformen der Erfindung mit Bezugnahme auf die Zeichnungen näher erläutert. Es zeigen:
- Figur 1: ein Blockdiagramm einer Ausführungsform eines erfindungsgemäßen Netzwerks,
- Figur 2: ein Flussdiagramm einer Ausführungsform eines erfindungsgemäßen Verfahrens,
- Figur 3: ein Blockdiagramm eines Ausführungsbeispiels eines Netzwerks.

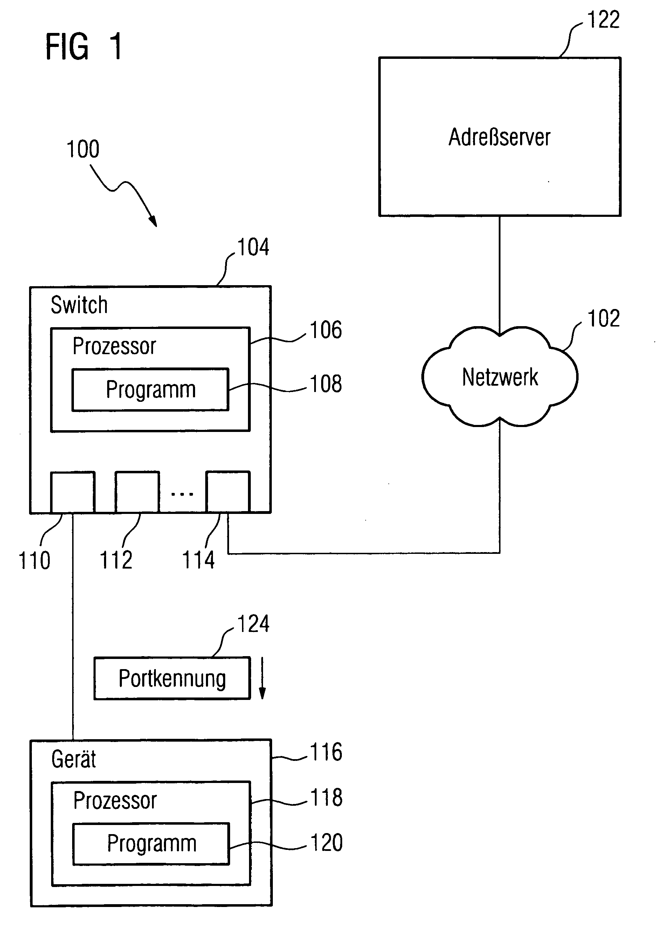

Figur 1 zeigt ein Automatisierungssystem 100. Das Automatisierungssystem 100 hat ein Kommunikationsnetzwerk 102, wie zum Beispiel ein Ethernet. Zu dem Netzwerk 102 gehören mehrere Koppelknoten, so genannte Switches, von denen ein Switch 104 in der Figur 1 exemplarisch gezeigt ist.

Der Switch 104 hat einen Prozessor 106 zur Ausführung eines Computerprogramms 108. Das Computerprogramm 108 ist in üblicher Weise auf einem digitalen Speichermedium, beispielsweise einem Arbeitsspeicher gespeichert. Der Switch 104 hat verschiedene Ports, von denen die Ports 110, 112, 114 exemplarisch in der Figur 1 dargestellt sind. Jeder der Ports des Switch 104 hat eine Portkennung, die auch als Port-ID bezeichnet wird.

An den Port 110 ist ein Automatisierungsgerät 116 angeschlossen. Bei dem Automatisierungsgerät 116 kann es sich im Prinzip um ein beliebiges Gerät der Automatisierungstechnik handeln, wie zum Beispiel einen Messwertgeber, einen Antrieb, eine Steuerung oder dergleichen.

Das Automatisierungsgerät 116 hat einen Prozessor 118 zur Ausführung eines Computerprogramms 120. Das Computerprogramm 120 ist in an sich bekannter Weise auf einem digitalen Speichermedium, wie zum Beispiel einem Arbeitsspeicher, gespeichert.

Ein Adressserver 122 ist über das Netzwerk 102 mit dem Port 114 des Switch 104 verbunden. Der Adressserver 122 dient zur Zuordnung von Internetprotokoll (IP)-Adressen zu den Teilnehmern des Automatisierungssystems 100.

Der Ablauf zur Zuordnung einer IP-Adresse zu dem Automatisierungsgerät 116 ist wie folgt:

Nach Anschluss des Automatisierungsgeräts 116 an den Port 110 empfängt das Automatisierungsgerät 116 von dem Port 110 dessen Portkennung 124. Die Portkennung 124 wird in dem Automatisierungsgerät 116 gespeichert. Die Portkennung 124 wird dann von dem Automatisierungsgerät 116 über den Switch 104 und das Netzwerk 102 zu dem Adressserver 122 übertragen. Auf der Grundlage der Portkennung 124 ordnet der Adressserver dem Automatisierungsgerät 116 seine IP-Adresse zu.

Dieses Verfahren kann bei der Initialisierung des Automatisierungssystems 100 verwendet werden, um sämtlichen der Teilnehmer des Automatisierungssystems eine IP-Adresse zuzuordnen. Von besonderem Vorteil dieses Verfahrens ist, dass es auch beim Austausch eines defekten Geräts angewendet werden kann.

Fällt beispielsweise das Automatisierungsgerät 116 aus, so wird es durch ein entsprechendes, funktionsfähiges Automatisierungsgerät 116 ausgetauscht. Durch des Anschlusses des ausgetauschten Automatisierungsgeräts 116 an den Port 110 wird die Vergabe der IP-Adresse erneut angestoßen.

Der Algorithmus zur Vergabe der IP-Adressen kommt dabei zu demselben Ergebnis wie bei der Zuordnung der IP-Adresse zu dem ursprünglichen Automatisierungsgerät 116, da der Algorithmus auf der Grundlage derselben Portkennung 124 durchgeführt wird.

Für die Übertragung der Portkennung 124 von dem Switch 104 zu dem Automatisierungsgerät 116 kommt vorzugsweise ein so genanntes Nachbarschaftserkennungsprotokoll zum Einsatz. Solche Nachbarschaftserkennungsprotokolle sind an sich aus dem Stand der Technik bekannt. Mit Hilfe eines Nachbarschaftserkennungsprotokolls findet ein automatischer Datenaustausch zwischen benachbarten Geräten in einem Netzwerk statt.

Vorzugsweise erfolgt die Nachbarschaftserkennung durch LLDP, entsprechend Standard IEEE802.1AB (siehe Internetseite http://www.ieee802.org/1/pages/802.1ab.html). Mit LLDP liefert jeder Ethernet-Teilnehmer (DTE) seinen Namen (Chassis-ID) und den Sendeport (Port-ID). Mit Hilfe der Mechanismen des Slow-Protokolls (IEEE803.1) liefert LLDP Nachbarschaftsinformationen in geswitchen Netzen.

Für die Übertragung der Portkennung 124 von dem Automatisierungsgerät 116 zu dem Adressserver 122 kommt vorzugsweise DHCP zum Einsatz. In diesem Fall handelt es sich bei dem Adressserver 122 um einen so genannten DHCP-Server. Nach dem DHCP-Protokoll sendet das Automatisierungsgerät 116 einen DHCP-Request an den Adressserver 122, um die Zuordnung einer IP-Adresse anzufordern. Dabei wird die Portkennung 124 als Teil des DHCP-Request von dem Automatisierungsgerät 116 an den Adressserver 122 übertragen, der auf dieser Grundlage die IP-Adresse dem Automatisierungsgerät 116 zuordnet.

Alternativ kommt DCP zum Einsatz. In diesem Fall handelt es sich bei dem Adressserver 122 um einen DCP-Server. Abweichend von DHCP geht die Initiative zur Zuordnung der IP-Adresse nicht von dem Automatisierungsgerät 116, sondern von dem DCP-Adressserver 122 selbst aus. Auf eine entsprechende Anfrage des DCP-Adressservers 122 hin, antwortet das Automatisierungsgerät 116 mit der in dem Automatisierungsgerät 116 gespeicherten Portkennung 124. Auf dieser Grundlage nimmt der DCP-Adressserver 122 dann die Zuordnung der IP-Adresse zu dem Automatisierungsgerät 116 vor.

Vorzugsweise wird LLDP in Verbindung mit DHCP und Option 82 eingesetzt. Da über LLDP jedes Gerät seinen Nachbarn kennt, kann diese Information für die eindeutige Adressierung verwendet werden. Wird in dem Netzwerk 102 DHCP verwendet, so speichert der DHCP-Adressserver 122 neben der Client-ID bzw. Host-ID auch die Nachbarschaftsinformation zu einer IP-Adresse. Fordert beispielsweise das Automatisierungsgerät 116 vom DHCP-Adressserver 122 eine IP-Adresse an, so füllt es das als Option 82 bezeichnete Feld mit der vom Nachbarn, das heißt vom Switch 104 erhaltenen Chassis-ID und Port-ID (d.h. beispielsweise Portkennung 124). Damit entfällt die aufwändige Filterung der DHCP-Requests in den Switches vollständig, aber der DHCP-Adressserver 122 kann trotzdem über die Topologieinformation, das heißt die Portkennung 124, eine IP-Adresse zuordnen.

Von besonderem Vorteil ist dabei, dass ein Gerätetausch, beispielsweise im Falle eines Defekts des Automatisierungsgeräts 116, ohne Programmiergerät, wechselbarem Speichermedium, wie zum Beispiel MMC, oder einen Eingriff beim DHCP-Adressserver 122 möglich ist. Ferner ist LLDP ein kostengünstig zu realisierendes Protokoll. Aufgrund dessen können die Switches des Automatisierungssystems 100 bei gleicher Leistungsfähigkeit kostengünstiger realisiert werden.

Wird in dem betrachteten Netzwerk 102 DCP verwendet, so speichert der DCP-Client, das heißt beispielsweise das Automatisierungsgerät 116, neben dem Stationsnamen, das heißt der Client-ID, auch die Nachbarschaftsinformation. Bei DCP ist im Vergleich zu DHCP die Richtung bei der Adressvergabe umgekehrt. Beispielsweise sucht der DCP-Adressserver 122 bei Bedarf aktiv nach einem bestimmten Automatisierungsgerät, wie zum Beispiel dem Automatisierungsgerät 116.

Er kann diese Suche entweder über den Stationsnamen, Client-ID, Chassis-ID oder über Nachbarschaftsinformationen durchführen. Findet der DCP-Adressserver 122 das gewünschte Gerät 116, so wird die zugeordnete IP-Adresse vergeben.

Als Variante kann aber auch die Nachbarschaftsinformation dem DCP-Adressserver 122 vorgegeben werden. In diesem Fall kann die Suche über Name der Station, Client-ID oder Chassis-ID entfallen, da die Nachbarschaftsinformation für das weitere Prozedere ausreichend ist.

Als Variante wird nur der Name der Station, Client-ID und Chassis-ID dem DCP-Adressserver 122 vorgegeben. In diesem Fall erfolgt die Suche nach dem Automatisierungsgerät 116 über den Namen der Station, Client-ID und Chassis-ID und die gespeicherte Nachbarschaftsinformation.

Während der Inbetriebnahmephase werden einmalig in den Automatisierungsgeräten des Automatisierungssystems 100 Name der Station, Client-ID und Chassis-ID hinterlegt. Diese werden im Weiteren für die Suche verwendet. Ist das gewünschte Automatisierungsgerät gefunden, wird zusätzlich die Nachbarschaftsinformation ausgelesen und in den DCP-Adressserver 122 hinterlegt.

Bei dieser Ausführungsform ist von besonderem Vorteil, dass anstelle eines DHCP-Adressservers ein wesentlich kostengünstigerer DCP-Adressserver eingesetzt wird. Diese Ausführungsform ist besonders für kleinere Automatisierungssysteme mit einer relativ geringen Anzahl von Teilnehmern geeignet.

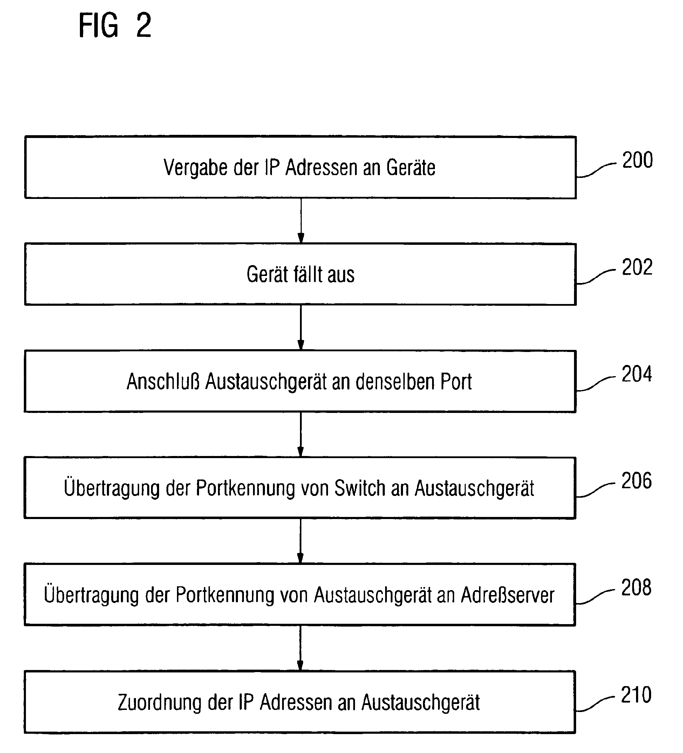

Die Figur 2 zeigt ein entsprechendes Flussdiagramm. In dem Schritt 200 erfolgt bei der Inbetriebnahme des Automatisierungssystems die Vergabe der IP-Adressen an die Teilnehmer des Automatisierungssystems. In dem Schritt 202 fällt während des Betriebs des Automatisierungssystems eines der Automatisierungsgeräte aus.

In dem Schritt 204 wird das defekte Automatisierungsgerät ausgetauscht, indem es an denselben Port desselben Switches wie das ursprüngliche Automatisierungsgerät angeschlossen wird. In dem Schritt 206 wird die Portkennung von dem Switch an das Austauschgerät übertragen. Dies erfolgt vorzugsweise nach einem Nachbarschaftserkennungsprotokoll. In dem Schritt 208 wird die Portkennung von dem Austauschgerät an einen Adressserver übertragen. Dies erfolgt beispielsweise nach DHCP oder DCP. In dem Schritt 210 erfolgt die Zuordnung der IP-Adresse an das Austauschgerät durch den Adressserver.

Vorzugsweise werden die Schritte 206, 208 und 210 in der selben Art und Weise auch bei der Inbetriebnahmephase des Automatisierungssystems, das heißt in dem Schritt 200, durchgeführt. Das bedeutet, dass die Schritte 206 bis 210 für das Austauschgerät während des laufenden Betriebs des Automatisierüngssystems 100 wiederholt werden, wobei der Vergabealgorithmus für die IP-Adresse zu dem selben Ergebnis kommt, da sich die Portkennung nicht geändert hat.

Im weiteren werden verschiedene Anwendungsszenarien der vorliegenden Erfindung beispielhaft erläutert:

### Szenario 1:

Alle Geräte haben ihren Identifikator (Kennung) erhalten und werden eingeschaltet. Nach dem Einschalten senden die Geräte einen DHCP-Request mit dem Identifikator an den DHCP Server. Dieser ordnet dem Client in der Antwort seine eindeutige IP-Adresse zu.

**Prinzip:**

| Identifikator | Alias | IP |
|---|---|---|
| Client1.Anlage1.Werk1 | Port1.Client2.Anlage1.Werk1 | 10.0.0.1 |
| Client2.Anlagel.Werk1 | Port3.Client1.Anlage1.Werk1 | 10.0.0.2 |
| Client3.Anlage1.Werk1 | Port1.Client2.Anlage1.Werk1 | 10.0.0.3 |
| ... | | |

### Szenario 2:

In einer laufenden Anlage wird ein Client getauscht. Dieser wird dem Lager entnommen und kennt seinen Identifikator nicht. Er bedient sich des Port-Identifikators seines Nachbarn, der als Alias für den Client im DHCP Server gespeichert ist. Z.B. über den ebenfalls vom DHCP Server lieferbaren "Host Name" erhält der neue Client seinen Identifikator und speichert ihn remanent für die weitere Verwendung.

### Szenario 3: (mit DCP):

Es wird eine Anlage aufgebaut bei der alle Nachbarschaften und der Anschlusspunkt des Engineering Systems(ES) bekannt sind. Nach dem Einschalten der Spannung hat kein Client einen Identifikator. Das Projektierungssystem (Engineering System (ES)) kennt die zu vergebenden Identifikatoren und sucht über LLDP seinen direkten Nachbarn. Ist dieser Identifiziert, so wird er über z.B. DCP mit seinem Identifikator getauft. Der Client mit dem Identifikator gibt diesen über LLDP an seine direkten Nachbarn weiter. Damit sind diese über den im Szenario 2 beschriebenen ALIAS adressierbar und werden ebenfalls getauft. Dadurch wird lawinenartig das gesamte LAN / Teil LAN / die gesamte Nachbarschaft "getauft".

### Szenario 4: (mit DHCP):

Es wird eine Anlage aufgebaut bei der alle Nachbarschaften und der Anschlusspunkt des Engineering Systems(ES) bekannt sind.

Nach dem Einschalten der Spannung hat kein Client einen Identifikator. Das ES kennt die zu vergebenden Identifikatoren und sucht über LLDP seinen direkten Nachbarn. Ist dieser Identifiziert, so wird er über z.B. DCP mit seinem Identifikator "getauft":

Der Client mit dem Identifikator gibt diesen über LLDP an seine direkten Nachbarn weiter.
Damit sind diese über den im Szenario 2 beschriebenen ALIAS adressierbar erhalten über DHCP ihre IP-Adresse und ihren Identifikator. Dadurch wird lawinenartig das gesamte LAN / Teil LAN / die gesamte Nachbarschaft getauft.

### Szenario 5: (mit DCP):

Es wird eine Serienmaschine / es werden mehrere Serienmaschinen aufgebaut bei der für eine Serienmaschine alle Nachbarschaften und der Anschlusspunkt des Engineering Systems(ES) bekannt sind.

Mit dem in Szenario 3 beschriebenen Verfahren ist mit einem "Knopfdruck" die gesamte Maschine zu individualisieren. Damit ist mit geringem Aufwand eine schnelle Inbetriebnahme möglich.
Neben dem ES kann diese Aufgabe auch von einer SPS oder einem einfachen Taufgerät übernommen werden.

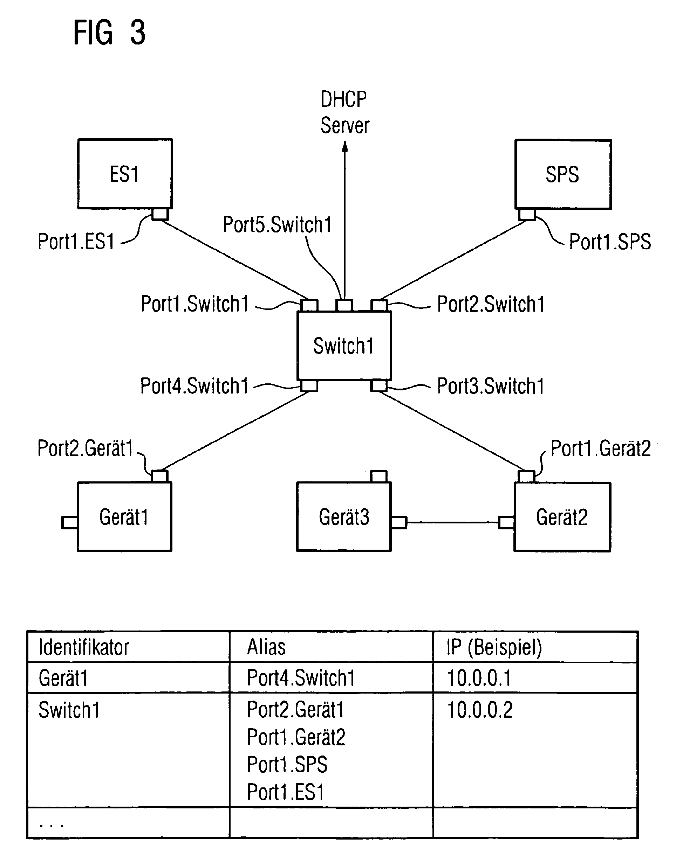

Die Fig. 3 zeigt eine Beispiel für eine entsprechende Netztopologie.

## Patentansprüche

1. Verfahren zur Zuordnung einer IP-Adresse zu einem Gerät (116) mit folgenden Schritten:
- Anschluss des Geräts (116) an einen Port (110) eines Switches (104),
- Übertragung einer Kennung (124) des Ports (110) von dem Switch (104) an das Gerät (116),
- Übertragung der Kennung (124) des Ports (110) von dem Gerät (116) an einen Adressserver (122),
- Zuordnung der IP-Adresse zu dem Gerät (116) auf der Grundlage der Kennung (124) des Ports (110).

2. Verfahren nach Anspruch 1, wobei die Übertragung der Kennung (124) des Ports (110) von dem Switch an das Gerät (116) nach einem Nachbarschaftserkennungsprotokoll erfolgt.

3. Verfahren nach Anspruch 2, wobei es sich bei dem Nachbarschaftserkennungsprotokoll um IEEE802.1AB handelt.

4. Verfahren nach einem der Ansprüche 1, 2 oder 3, wobei die Übertragung der Kennung (124) des Ports (110) von dem Gerät (116) an den Adressserver (122) mittels eines DHCP-Protokolls erfolgt.

5. Verfahren nach einem der Ansprüche 1, 2 oder 3, wobei die Übertragung der Kennung (124) des Ports (110) von dem Gerät (116) an den Adressserver (122) mittels eines Protokolls erfolgt, wobei das Protokoll **dadurch gekennzeichnet ist, dass** die Vergabe von IP-Adressen durch den Adressserver (122) eingeleitet wird, wobei der Adressserver (122) von dem Gerät (116) die Kennung (124) des Ports (122) abfrägt, an den das Gerät angeschlossen ist, um auf dieser Grundlage die IP-Adresse dem Gerät (116) zuzuordnen.

6. Digitales Speichermedium mit Programminstruktionen zur Durchführung der folgenden Schritte beim Betrieb auf einem Gerät zum Anschluss an einen Port eines Switches:
- Empfang einer Kennung (124) des Ports (110) durch das an den Port (110) angeschlossene Gerät (116),
- Sendung der Kennung (124) des Ports (110) von dem Gerät (116) an einen Adressserver (122) zur Zuordnung einer IP-Adresse zu dem Gerät (116) auf der Grundlage der Kennung (124) des Ports (110) durch den Adressserver (122).

7. Digitales Speichermedium nach Anspruch 6, mit weiteren Programminstruktionen eines Nachbarschaftserkennungsprotokolls.

8. Digitales Speichermedium nach Anspruch 7, wobei es sich bei dem Nachbarschaftserkennungsprotokoll um IEEE802.1AB handelt.

9. Digitales Speichermedium nach Anspruch 6, 7 oder 8, mit weiteren Programminstruktionen zur Sendung der Kennung des Ports nach einem DHCP-Protokoll.

10. Digitales Speichermedium nach einem der Ansprüche 6 bis 9, mit weiteren Programminstruktionen zur Sendung der Kennung des Ports mittels eines Protokolls, wobei das Protokoll **dadurch gekennzeichnet ist, dass** die Vergabe von IP-Adressen durch einen Adressserver eingeleitet wird, wobei der Adressserver von dem Gerät die Kennung des Ports abfrägt, an den das Gerät angeschlossen ist, um auf dieser Grundlage die IP-Adresse dem Gerät zuzuordnen.

11. Gerät zum Anschluss an einen Port (110) eines Switches (104), **dadurch gekennzeichnet, dass** das Gerät
- Mittel (118, 120) zum Empfang einer Kennung (124) des Ports (110) von dem Switch (104) aufweist,
- Mittel (118, 120) zur Sendung der Kennung (124) des Ports (110) von dem Gerät (116) zu einem Adressserver (122) zur Zuordnung einer IP-Adresse zu dem Gerät (116) auf der Grundlage der Kennung (124) des Ports (110) aufweist.

12. Gerät nach Anspruch 11, wobei die Mittel (118, 120) zum Empfang der Kennung (124) des Ports (110) zur Durchführung eines Nachbarschaftserkennungsprotokolls ausgebildet sind.

13. Gerät nach Anspruch 12, wobei es sich bei dem Nachbarschaftserkennungsprotokoll um IEEE802.1AB handelt.

14. Gerät nach Anspruch 11, 12 oder 13, wobei die Mittel (118, 120) zur Sendung der Kennung (124) des Ports (110) nach einem DHCP-Protokoll ausgebildet sind.

15. Gerät nach einem der Ansprüche 11 bis 14, wobei die Mittel (118, 120) zur Sendung der Kennung (124) des Ports (110) nach einem Protokoll ausgebildet sind, wobei das Protokoll **dadurch gekennzeichnet ist, dass** die Vergabe von IP-Adressen durch den Adressserver (122) eingeleitet wird, wobei der Adressserver (122) von dem Gerät (116) die Kennung (124) des Ports (122) abfrägt, an den das Gerät angeschlossen ist, um auf dieser Grundlage die IP-Adresse dem Gerät (116) zuzuordnen.

16. Automatisierungssystem mit zumindest einem Gerät (116) und zumindest einem Switch (104), wobei der Switch mehrere Ports (110, 112, ..., 114) aufweist, wobei jeder der Ports eine eindeutige Kennung hat, wobei der Switch Mittel zur Sendung einer Kennung (124) eines der Ports (110) an ein an den betreffenden Port (110) angeschlossenes Gerät (116) aufweist,
**dadurch gekennzeichnet, dass**
- das Automatisierungssystem ferner einen Adressserver (122) aufweist und
- der Switch Mittel zur Weiterleitung eines von dem Gerät empfangenen Datenpakets, welches die Kennung (124) des Ports (110) beinhaltet, an den Adressserver (122) zur Zuordnung einer IP-Adresse zu dem Gerät (116) auf der Grundlage der Kennung (124) des Ports (110) aufweist.

17. Automatisierungssystem nach Anspruch 16, wobei die Mittel zur Sendung der Kennung (124)des Ports (110) an das Gerät (116) zur Sendung nach einem Nachbarschaftserkennungsprotokoll ausgebildet sind.

18. Automatisierungssystem nach Anspruch 17, wobei es sich bei dem Nachbarschaftserkennungsprotokoll um IEEE802.1AB handelt.

19. Automatisierungssystem nach einem der Ansprüche 16, 17 oder 18, wobei die Mittel zur Weiterleitung des Datenpakets mit der Kennung (124) des Ports (110) zur Weiterleitung nach einem DHCP-Protokoll ausgebildet sind.

20. Automatisierungssystem nach einem der Ansprüche 16 bis 19, wobei die Mittel zur Weiterleitung des Datenpakets mit der Kennung (124) des Ports (110) zur Weiterleitung nach einem Protokoll ausgebildet sind, wobei das Protokoll **dadurch gekennzeichnet ist, dass** die Vergabe von IP-Adressen durch den Adressserver (122) eingeleitet wird, wobei der Adressserver (122) von dem Gerät (116) die Kennung (124) des Ports (122) abfrägt, an den das Gerät angeschlossen ist, um auf dieser Grundlage die IP-Adresse dem Gerät (116) zuzuordnen.

## Claims

1. Method for assigning an IP address to a device (116), comprising the following steps:
- connecting the device (116) to a port (110) of a switch (104),
- transmitting an identification code (124) of the port (110) from the switch (104) to the device (116),
- transmitting the identification code (124) of the port (110) from the device (116) to an address server (122),
- assigning the IP address to the device (116) on the basis of the identification code (124) of the port (110) .

2. Method according to claim 1, wherein the transmission of the identification code (124) of the port (110) from the switch to the device (116) is done in accordance with a neighbour discovery protocol.

3. Method according to claim 2, wherein the neighbour discovery protocol is IEEE802.1AB.

4. Method according to one of claims 1, 2 or 3, wherein the transmission of the identification code (124) of the port (110) from the device (116) to the address server (122) is performed using a DHCP protocol.

5. Method according to one of claims 1, 2 or 3, wherein the transmission of the identification code (124) of the port (110) from the device (116) to the address server (122) is performed using a protocol, the protocol being **characterised in that** the allocation of IP addresses is initiated by the address server (122), with the address server (122) requesting from the device (116) the identification code (124) of the port (110) to which the device is connected in order to assign the IP address to the device (116) on this basis.

6. Digital storage medium having program instructions for carrying out the following steps when operating on a device for connecting to a port of a switch:
- receiving an identification code (124) of the port (110) by means of the device (116) that is connected to the port (110),
- sending the identification code (124) of the port (110) from the device (116) to an address server (122) for assignment of an IP address to the device (116) by the address server (122) on the basis of the identification code (124) of the port (110).

7. Digital storage medium according to claim 6, having further program instructions of a neighbour discovery protocol.

8. Digital storage medium according to claim 7, wherein the neighbour discovery protocol is IEEE802.1AB.

9. Digital storage medium according to claim 6, 7 or 8, having further program instructions for sending the identification code of the port in accordance with a DHCP protocol.

10. Digital storage medium according to one of claims 6 to 9, having further program instructions for sending the identification code of the port using a protocol, the protocol being **characterised in that** the allocation of IP addresses is initiated by an address server, with the address server requesting from the device the identification code of the port to which the device is connected in order to assign the IP address to the device (116) on this basis.

11. Device for connecting to a port (110) of a switch (104), **characterised in that** the device has
- means (118, 120) for receiving an identification code (124) of the port (110) from the switch (104),
- means (118, 120) for sending the identification code (124) of the port (110) from the device (116) to an address server (122) for assignment of an IP address to the device (116) on the basis of the identification code (124) of the port (110).

12. Device according to claim 11, wherein the means (118, 120) for receiving the identification code (124) of the port (110) are embodied to perform a neighbour discovery protocol.

13. Device according to claim 12, wherein the neighbour discovery protocol is IEEE802.1AB.

14. Device according to claim 11, 12 or 13, wherein the means (118, 120) for sending the identification code (124) of the port (110) are embodied in accordance with a DHCP protocol.

15. Device according to one of claims 11 to 14, wherein the means (118, 120) for sending the identification code (124) of the port (110) are embodied in accordance with a protocol, the protocol being **characterised in that** the allocation of IP addresses is initiated by the address server (122), with the address server (122) requesting from the device (116) the identification code (124) of the port (110) to which the device is connected in order to assign the IP address to the device (116) on this basis.

16. Automation system comprising at least one device (116) and at least one switch (104), the switch having a plurality of ports (110, 112, ..., 114), with each of the ports having a unique identification code, the switch having means for sending an identification code (124) of one of the ports (110) to a device (116) that is connected to the relevant port (110),
**characterised in that**
- the automation system additionally has an address server (122) and
- the switch has means for forwarding a data packet that is received from the device, said data packet containing the identification code (124) of the port (110), to the address server (122) for assignment of an IP address to the device (116) on the basis of the identification code (124) of the port (110).

17. Automation system according to claim 16, wherein the means for sending the identification code (124) of the port (110) to the device (116) are embodied in accordance with a neighbour discovery protocol.

18. Automation system according to claim 17, wherein the neighbour discovery protocol is IEEE802.1AB.

19. Automation system according to one of claims 16, 17 or 18, wherein the means for forwarding the data packet containing the identification code (124) of the port (110) are embodied in accordance with a DHCP protocol.

20. Automation system according to one of claims 16 to 19, wherein the means for forwarding the data packet containing the identification code (124) of the port (110) are embodied for forwarding in accordance with a protocol, the protocol being **characterised in that** the allocation of IP addresses is initiated by the address server (122), with the address server (122) requesting from the device (116) the identification code (124) of the port (110) to which the device is connected in order to assign the IP address to the device (116) on this basis.

## Revendications

1. Procédé d' attribution d' une adresse IP à un appareil (116) comprenant les stades suivants :
- raccordement de l' appareil (116) à un port (110) d' un commutateur (104) ;
- transmission d' une caractéristique ( 124 ) du port ( 110 ) du commutateur ( 104 ) à l' appareil ( 116 ) ;
- transmission de la caractéristique ( 124 ) du port ( 110 ) de l'appareil ( 116 ) à un serveur ( 122 ) d' adresse ;
- attribution de l'adresse IP à l' appareil ( 116 ) sur la base de la caractéristique ( 124 ) du port ( 110 ).

2. Procédé suivant la revendication 1, dans lequel la transmission de la caractéristique ( 124 ) du port ( 110 ) du commutateur à l' appareil ( 116 ) s' effectue suivant un protocole de reconnaissance de voisinage.

3. Procédé suivant la revendication 2, dans lequel le protocole de reconnaissance de voisinage est IEEE802.1AB.

4. Procédé suivant l'une des revendications 1, 2 ou 3, dans lequel la transmission de la caractéristique ( 124 ) du port ( 110 ) de l' appareil ( 116 ) au serveur ( 122 ) d' adresse s' effectue au moyen d' un protocole DHCP.

5. Procédé suivant l'une des revendications 1, 2 ou 3, dans lequel la transmission de la caractéristique ( 124 ) du port ( 110 ) de l' appareil ( 116 ) au serveur ( 122 ) d' adresse s' effectue au moyen d' un protocole, le protocole étant **caractérisé en ce que** l'attribution d'adresse IP par le serveur ( 122 ) d' adresse est lancée, le serveur ( 122 ) d' adresse demandant à l' appareil ( 116 ) la caractéristique ( 124 ) du port ( 122 ), auquel l' appareil est raccordé pour, sur cette base, attribuer l'adresse IP à l' appareil.

6. Support de mémoire numérique ayant des instructions de programmation pour effectuer les stades suivants lors du fonctionnement sur un appareil de raccordement à un port d' un commutateur :
- réception d' une caractéristique ( 124 ) du port ( 110 ) par l' appareil ( 116 ) raccordé au port ( 110 ) ;
- envoi de la caractéristique ( 124 ) du port ( 110 ) de l' appareil ( 116 ) à un serveur ( 122 ) d' adresse pour 1' attribution d' une adresse IP à l' appareil ( 116 ) sur la base de la caractéristique ( 124 ) du port ( 110 ) par le serveur ( 122 ) d' adresse.

7. Support de mémoire numérique suivant la revendication 6 ayant des instructions de programme supplémentaires d' un protocole de reconnaissance de voisinage.

8. Support de mémoire numérique suivant la revendication 7, dans lequel le protocole de reconnaissance de voisinage est IEEE802.1AB.

9. Support de mémoire numérique suivant l'une des revendications 6, 7 ou 8 ayant des instructions de programme supplémentaires pour l'envoi de la caractéristique du port suivant le protocole DHCP.

10. Support de mémoire numérique suivant l'une des revendications 6 à 9 ayant des instructions de programme supplémentaires pour l'envoi de la caractéristique du port au moyen d' un protocole, le protocole étant **caractérisé en ce que** l'attribution d' adresse IP par le serveur d' adresse est lancée, le serveur d' adresse demandant à l' appareil la caractéristique du port, auquel l'appareil est raccordé, pour, sur cette base, attribuer l'adresse IP à l' appareil.

11. Appareil de raccordement à un port ( 110 ) d' un commutateur ( 104 ) **caractérisé en ce que** l' appareil :
- a des moyens ( 118, 120 ) de réception d' une caractéristique ( 124 ) du port ( 110 ) par le commutateur ( 104 ) ;
- a des moyens ( 118, 120 ) d' envoi de la caractéristique ( 124 ) du port ( 110 ) de l' appareil ( 116 ) à un serveur ( 122 ) d' adresse pour l' attribution d' une adresse IP à 1' appareil ( 116 ) sur la base de la caractéristique ( 124 ) du port ( 110 ).

12. Appareil suivant la revendication 11, dans lequel les moyens ( 118, 120 ) de réception de la caractéristique ( 124 ) du port ( 110 ) sont constitués pour effectuer un protocole de reconnaissance de voisinage.

13. Appareil suivant la revendication 12, dans lequel le protocole de reconnaissance de voisinage est IEEE802.1AB.

14. Appareil suivant l'une des revendications 11, 12 ou 13, dans lequel les moyens (118, 120) d' envoi de la caractéristique ( 124 ) du port ( 110 ) sont constitués suivant un protocole DHCP.

15. Appareil suivant l'une des revendications 11 à 14, dans lequel les moyens ( 118, 120 ) d' envoi de la caractéristique ( 124 ) du port ( 110 ) sont constitués suivant un protocole, le protocole étant **caractérisé en ce que** 1' attribution d'adresse IP par le serveur ( 122 ) d' adresse est lancée, le serveur ( 122 ) d' adresse demandant à l' appareil ( 116 ) la caractéristique ( 124 ) du port ( 122 ), auquel 1' appareil est raccordé pour, sur cette base, attribuer 1' adresse IP à l' appareil.

16. Système d' automatisation comprenant l' appareil ( 116 ) et au moins un commutateur ( 104 ), le commutateur ayant plusieurs ports ( 110, 112, ..., 114 ), chacun des ports ayant une caractéristique univoque, le commutateur ayant des moyens pour envoyer une caractéristique ( 124 ) de 1' un des ports ( 110 ) à un appareil ( 116 ) raccordé au port ( 110 ) concerné,
**caractérisé en ce que**
- le système d' automatisation a en outre un serveur ( 122 ) d' adresse ; et
- le commutateur a des moyens pour acheminer un paquet de données reçues par l' appareil et contenant la caractéristique ( 124 ) du port ( 120 ) au serveur ( 122 ) d' adresse pour l' attribution d' une adresse IP à l' appareil ( 116 ) sur la base de la caractéristique ( 124 ) du port ( 110 ) .

17. Système d' automatisation suivant la revendication 16, dans lequel les moyens d' envoi de la caractéristique ( 124 ) du port ( 110 ) à l' appareil ( 116 ) sont constitués pour l'envoi suivant un protocole de reconnaissance de voisinage.

18. Système d' automatisation suivant la revendication 17, dans lequel le protocole de reconnaissance de voisinage est IEEE802.1AB.

19. Système d' automatisation suivant l' une des revendications 16, 17 ou 18, dans lequel les moyens pour acheminer le paquet de données ayant la caractéristique ( 124 ) du port ( 110 ) sont constitués pour l'acheminement suivant un protocole DHCP.

20. Système d' automatisation suivant l' une des revendications 16 à 19, dans lequel les moyens d' acheminement du paquet de données ayant la caractéristique ( 124 ) du port ( 110 ) sont constitués pour l'acheminement suivant un protocole, le protocole étant **caractérisé en ce que** l' attribution d' adresse IP par le serveur ( 122 ) d' adresse est lancée, le serveur ( 122 ) d' adresse demandant à l' appareil ( 116 ) la caractéristique ( 124 ) du port ( 122 ), auquel l' appareil est raccordé pour, sur cette base, attribuer l' adresse IP à l' appareil.
